# EUROPÄISCHE PATENTANMELDUNG

(11) **EP 4 607 399 A1**
(43) Veröffentlichungstag der Anmeldung: **27.08.2025**
(21) Anmeldenummer: 25156238.5
(22) Anmeldetag: 06.02.2025
(51) Int. Cl.: G06F 30/20, G06F 111/02

(54) **VERFAHREN ZUR SYNCHRONISIERTEN SIMULATION VON MEHRKOMPONENTIGEN SIMULATIONSMODELLEN**

(30) Priorität: 22.02.2024 DE 102024104989
(71) Anmelder: dSPACE GmbH, 33102 Paderborn (DE)
(72) Erfinder: Aust, Martin, 33102 Paderborn (DE); Rühl, Martin, 33102 Paderborn (DE); Deter, Matthias, 33102 Paderborn (DE); Witteler, Tobias, 33102 Paderborn (DE)

(57) **Zusammenfassung**

Verfahren zur synchronisierten Simulation einer ersten Simulations-Komponente mittels einer CPU, und einer zweiten Simulations-Komponente mittels eines FPGA, wobei der zweiten Komponente eine kürzere Simulations-Schrittweite zugeordnet ist, als der ersten Komponente, mit den Schritten: Laden der ersten Simulations-Komponente auf eine Rechenfarm mit Rechnerbausteinen und der zweiten Simulations-Komponente auf eine Beschleunigerfarm mit Beschleunigerbausteinen, Festlegen eines Zeit-Masters, der eine Ausführung der beiden Simulations-Komponenten triggert, wobei ein Trigger die Ausführung eines Simulationsschritts umfassend einen Zeitschritt der ersten Simulations-Komponente und einer Mehrzahl n von Zeitschritten der zweiten Simulations-Komponente auslöst, Durchführen der Simulation durch wiederholtes Triggern eines Simulationsschritts abgearbeitet, wobei ein neuer Simulationsschritt getriggert wird, sobald die erste und die zweite Simulations-Komponente die Berechnungen des aktuellen Simulationsschritts beendet haben. Weiterhin betrifft die Erfindung ein Computersystem und einen nichtflüchtigen Datenträger.

## Beschreibung

Die Erfindung betrifft ein Verfahren zur synchronisierten SIL-Simulation von mehrkomponentigen Simulationsmodellen, wobei insbesondere eine erste Simulations-Komponente für die Ausführung auf einem Prozessor vorgesehen ist und eine zweite Simulations-Komponente für die Ausführung in einem programmierbaren Logikbaustein vorgesehen ist.

Solche Simulationsmodelle werden beispielsweise im Rahmen einer Hardware-in-the-Loop-Simulation (HIL-Simulation) verwendet, bei welcher Steuergeräte, insbesondere Steuergeräte für Kraftfahrzeuge, einer Prüfung auf korrekte Funktion unterzogen werden. Hierzu wird das zu prüfende Steuergerät an eine auch als I/O-Schaltung bezeichnete elektronische Schaltung mit Ein- und/oder Ausgabekanälen angeschlossen, um über die Schaltung Signale auf das Steuergerät aufzuprägen und/oder von diesem erzeugte Signale zu erfassen. Die von der I/O-Schaltung auszugebenden Signale werden ermittelt, indem auf einer Simulationsumgebung das Softwaremodell einer Testumgebung läuft, bei einem Kraftfahrzeug z.B. die Simulation einer Fahrt. So kann ein Steuergerät in einer simulierten Umgebung betrieben werden, als wenn es tatsächlich in der echten Umgebung betrieben würde.

Die Simulationsumgebung oder kurz der Simulator wird z.B. gebildet durch ein Echtzeitrechnersystem mit wenigstens einem Prozessor, welcher das Softwaremodell abarbeitet. Beispielsweise kann das Modell durch eine echtzeitfähige Software bzw. eine Vielzahl zusammenwirkender Softwaretools bereitgestellt werden, die vorzugsweise ein grafisches Benutzerinterface aufweist und besonders bevorzugt mittels Softwareobjekten programmiert wird. Die Software kann MATLAB, Simulink oder auch RTI (Real-Time-Interface) der Anmelderin, welche z.B. ein Verbindungsglied zu Simulink bildet, umfassen. Softwareobjekte werden in vorgenannten Fällen z.B. grafisch als Block programmiert, insbesondere hierarchisch. Eine Simulationsumgebung ist jedoch nicht auf die Verwendung dieser jeweils beispielhaft genannten Software beschränkt. Das Softwaremodell ist entweder direkt nach Programmierung oder nach Codegenerierung und Compilierung auf der Simulationsumgebung lauffähig.

Ein Echtzeitrechnersystem unterscheidet sich insbesondere dadurch von handelsüblichen Computersystemen, dass eine vorgegebene Latenz nicht überschritten wird, beispielsweise zwischen dem Eingang eines geänderten Ansteuersignals und der daraus resultierenden Reaktion, wie der Ausgabe eines geänderten Sensorsignals. Je nach zu simulierendem System kann dabei eine maximale Latenz von insbesondere 1 Millisekunde oder kürzer erforderlich sein.

Beispielsweise eine Simulation des Antriebs eines elektrischen Fahrzeugs (E-Drive) bzw. eine Simulation von Leistungselektronik stellt hohe Anforderungen an die Schnelligkeit des Regelkreises, insbesondere mit maximal zulässigen Latenzen im Bereich von einzelnen Mikrosekunden, so dass Echtzeitsimulationen häufig nicht mehr von reinen Prozessormodellen und prozessorgesteuerten I/O Kanälen abgedeckt werden, sondern die zeitkritischen Modellteile auf einem frei programmierbaren Logikbaustein ausgeführt werden. Bei dem frei programmierbaren Logikbaustein kann es sich insbesondere einem Field Programmable Gate Array (FPGA) handeln, der vorzugsweise dedizierte Eingabe- und Ausgabekanäle aufweist. In der Regel wird die zeitkritische Komponente des Simulationsmodells in eine Konfiguration für den programmierbaren Logikbaustein implementiert. Bei der Initialisierung werden die Logikelemente des FPGAs anhand des Konfigurationsbitstroms zur Ausführung der gewünschten Funktionalität verschaltet und der FPGA dazu konfiguriert, Daten mit der Prozessor-Komponente des Simulationsmodells auszutauschen, welche auf dem Prozessor des Echtzeitrechnersystems ausgeführt wird.

Eine HIL-Simulation setzt die Verfügbarkeit zumindest eines protoypischen Steuergeräts voraus und kann daher erst in einer späten Entwicklungsphase eingesetzt werden. Um möglichst frühzeitig Fehler in der Steuergeräte-Software zu finden, werden zunehmend Software-in-the-Loop-Tests (SIL-Tests) eingesetzt. Beispielsweise bietet dSPACE unter der Bezeichnung VEOS eine PC-basierte Simulationsplattform für die Absicherung von Software elektronischer Steuergeräte (ECU) an, die SIL-Tests bzw. SIL-Simulationen unterstützt. VEOS ermöglicht das Simulieren einer Vielzahl unterschiedlicher Modelle, darunter Funktionsmodelle, Functional Mock-up Units (FMUs), virtuelle Steuergeräte (V-ECUs) und Fahrzeugmodelle, unabhängig von jeglicher Simulationshardware in frühen Phasen der Entwicklung. In Szenarien mit mehreren Modellen werden Import, Anschluss und Ausführung beliebig vieler Funktions- und Streckenmodelle basierend auf Simulink oder Functional Mock-up Interface (FMI) unterstützt.

Diese PC-basierten SIL-Simulationen werden offline durchgeführt. Das bedeutet, dass keine Verbindung zur tatsächlichen Zielhardware erforderlich ist, sondern die Simulation auf einer Recheneinheit bzw. Computer ausgeführt wird. Abhängig von dem Prozessor des Computers, der die Simulation berechnet, und den Daten, die von den Simulationsteilnehmers zur Verfügung stehen, ergeben sich unterschiedliche Herausforderungen und Vorgehensweisen. Insbesondere eine für die Ausführung auf FPGA vorgesehene Simulations-Komponente eines Simulationsmodells kann bisher nicht in einer SIL-Simulation verwendet werden. Eine prozessorbasierte Emulation eines Konfigurationsbitstroms ist um mehrere Größenordnungen langsamer als der programmierbare Logikbaustein selbst. Darüber hinaus ist die SIL-Simulation nicht zeitsynchron, sondern eventbasiert bzw. erfolgt in einer virtuellen Zeitdomäne. Hierdurch wird die Berechnungsdauer von Simulationsschritten dynamisch, die Simulation kann sowohl schneller als auch deutlich langsamer als Echtzeit erfolgen, und insbesondere auch zur Laufzeit variieren, was eine Kopplung mit echter FPGA-Hardware zur Beschleunigung erschwert. Durch diesen Umstand ist eine performante SIL-Simulation von E-Maschinen derzeit nicht möglich. Resultierend ist die Anwendung von FPGA-Modellen in einer SIL-Simulation derzeit in der Praxis nicht nutzbar.

Vor diesem Hintergrund besteht die Aufgabe der Erfindung darin, ein Verfahren und eine Vorrichtung anzugeben, welche den Stand der Technik weiterbilden und vorzugsweise eine Software-in-the-Loop-Simulation von kombinierten Simulationsmodellen mit Prozessor- und FPGA-Anteilen ermöglicht.

Die Aufgabe wird durch ein Verfahren zur synchronisierten SIL-Simulation eines Simulationsmodells mit einer ersten Simulations-Komponente, die für einen Rechnerbaustein vorgesehen ist, und einer zweiten Simulations-Komponente, die für einen Beschleunigerbaustein vorgesehen ist, mit den Merkmalen von Anspruch 1 und ein Rechnersystem mit den Merkmalen von Anspruch 8 gelöst. Vorteilhafte Ausgestaltungen der Erfindung sind Gegenstand von abhängigen Unteransprüchen.

Es wird also ein Verfahren zur synchronisierten SIL-Simulation einer ersten Simulations-Komponente, die für einen Rechnerbaustein vorgesehen ist, und einer zweiten Simulations-Komponente, die für einen Beschleunigerbaustein vorgesehen ist, bereitgestellt. Der ersten Komponente ist eine erste Simulations-Schrittweite zugeordnet, und der zweiten Komponente ist eine zweite Simulations-Schrittweite zugeordnet, insbesondere eine kürzere. Das Verfahren umfasst die Schritte
- Laden der ersten Simulations-Komponente auf eine Rechenfarm mit mindestens einem Rechnerbaustein und der zweiten Simulations-Komponente auf eine Beschleunigerfarm mit mindestens einem Beschleunigerbaustein,
- Festlegen eines Zeit-Masters, der eine Ausführung der ersten Simulations-Komponente und der zweiten Simulations-Komponente triggert, wobei ein Trigger die Ausführung eines Simulationsschritts umfassend einen Zeitschritt der ersten Simulations-Komponente und einer Mehrzahl n von Zeitschritten der zweiten Simulations-Komponente auslöst,
- Durchführen der Simulation durch wiederholtes Triggern eines Simulationsschritts, wobei ein neuer Simulationsschritt getriggert wird, sobald die erste und die zweite Simulations-Komponente die Berechnungen des aktuellen Simulationsschritts beendet haben.

Die Erfindung hat den Vorteil, dass ein konsistenter Workflow möglich wird, bei dem Simulationsmodelle 1:1 von HIL auf SIL übertragen werden können. Eine bestehende SIL-Toolkette kann dahingehend erweitert werden, dass sie mit bereits vorhandenen plattformspezifisch verteilten Multi-Rate-Anwendungen genutzt werden kann.

In einer bevorzugten Ausführungsform der Erfindung ist der Rechnerbaustein ein Prozessor, wohingegen der Beschleunigerbaustein ein programmierbarer Logikbaustein und die zweite Komponente als Konfigurationsbitstrom ausgeführt ist. Diese Ausführungsform ist insbesondere für die Simulation von elektrischen Maschinen bzw. Antrieben und/oder Leistungselektronik geeignet.

In einer besonders bevorzugten Ausführungsform der Erfindung weist der programmierbare Logikbaustein einen Clock-Enable-Eingang auf, mittels dessen zumindest ein die zweite Komponente implementierender Teil des programmierbaren Logikbausteins angehalten wird, sobald die gewünschte Anzahl von Takten für den Simulationsschritt abgearbeitet wurde. Kommt es daher zu Variationen der Berechnungsdauer von Simulationsschritten in der virtuellen Zeitdomäne der SIL-Simulation, so kann die Wartezeit, für welche zumindest ein Teil des programmierbaren Logikbausteins angehalten wird, entsprechend verlängert werden.

In Ausführungsformen der Erfindung ist der Rechenbaustein ein Prozessor einer ersten Instruktionsarchitektur, während der Beschleunigerbaustein mindestens einen Rechenkern mit Unterstützung von Parallelverarbeitung und/oder mindestens einen Rechenkern für Matrixberechnungen und/oder einen Prozessor mit einer zweien Instruktionsarchitektur, die sich von der ersten Instruktionsarchitektur unterscheidet, umfasst. Das Verfahren zur synchronisierten SIL-Simulation einer ersten und einer zweiten Simulations-Komponente ist auf verschiedenen heterogenen Hardwareplattformen anwendbar.

Zweckmäßigerweise die Mehrzahl n von Zeitschritten der zweiten Simulations-Komponente aus dem Verhältnis eines Zeitschritts der ersten Simulations-Komponente zu einem Zeitschritt der zweiten Simulations-Komponente ermittelt wird. Hierbei werden insbesondere die Zeitschritte betrachtet, die für eine HIL-Simulation gelten. Dies ist vorteilhaft, weil der Zeitschritt der ersten Simulations-Komponente im HIL-System einer realen Zeit entspricht, wohingegen im Fall einer SIL-Simulation eine nichtstetige virtuelle Zeit verwendet wird.

In einer bevorzugten Ausführungsform der Erfindung werden die Mehrzahl n von Zeitschritten der zweiten Simulations-Komponente synchron zu einem festen Takt des Beschleunigerbausteins berechnet.

In einer Ausführungsform der Erfindung wird ein gesonderter Prozess auf dem Prozessor, welcher die erste Komponente ausführt, als Zeit-Master festgelegt.

Die Erfindung betrifft weiterhin ein Rechnersystem, umfassend eine Rechenfarm mit mindestens einem Prozessor, insbesondere einer Vielzahl von Prozessoren, eine Beschleunigerfarm mit mindestens einem programmierbaren Logikbaustein, insbesondere einer Vielzahl von programmierbaren Logikbausteinen. Auf einem nichtflüchtigen Speicher des Rechnersystems sind Instruktionen zur Durchführung eines erfindungsgemäßen Verfahrens hinterlegt.

Ferner betrifft die Erfindung einen nichtflüchtigen Datenträger mit einem computerlesbaren Speichermedium, auf dem Befehle eingebettet sind, die, wenn sie von einem Prozessor ausgeführt werden, bewirken, dass der Prozessor dazu eingerichtet ist, ein erfindungsgemäßes Verfahren auszuführen.

Die Erfindung wird nachfolgend unter Bezugnahme auf die Zeichnungen näher erläutert. Hierbei werden gleichartige Teile mit identischen Bezeichnungen beschriftet. Die dargestellten Ausführungsformen sind stark schematisiert, d.h. die Abstände und die lateralen und die vertikalen Abmessungen sind nicht maßstäblich und weisen, sofern nicht anders angegeben, auch keine ableitbaren geometrischen Relationen zueinander auf.

Darin zeigt:
- Figur 1: eine beispielhafte Ansicht eines HIL-Simulators, der ein erstes Teilmodell auf einem Prozessor und ein zweites Teilmodell auf einem FPGA ausführt,
- Figur 2: eine schematische Darstellung einer Multirate-Simulation auf einem HIL-Simulator, und
- Figur 3: eine schematische Darstellung einer Multirate-Simulation im SIL-Fall.

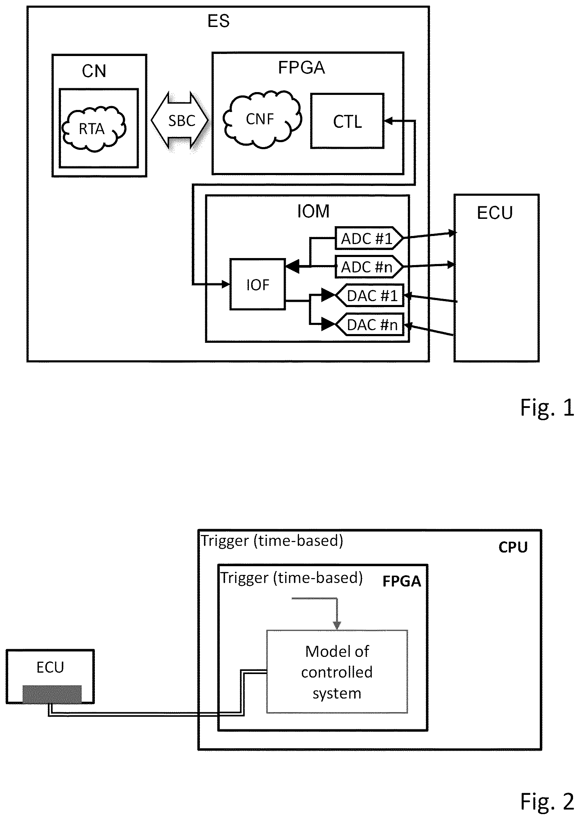

In Figur 1 ist schematisch ein beispielgemäßer HIL-Simulator ES und einem zu testenden Steuergerät ECU dargestellt.

Der echtzeitfähige HIL-Simulator ES umfasst einen Rechenknoten CN, der mindestens einen Prozessor CPU umfasst. Über einen Hochgeschwindigkeitsbus SBC ist ein Logikboard mit einem programmierbaren Logikbaustein FPGA, zwei I/O-Schaltungen ADC, DAC mit dem Rechenknoten verbunden. Es kann auch vorgesehen sein, dass der Simulator ES mehrere Logikboards bzw. mehrere programmierbare Logikbausteine FPGA auf einem Logikboard aufweist. Das Logikboard weist vorzugsweise einen oder mehrere Steckplätze für I/O-Module auf. Dargestellt ist ein I/O-Modul IOM, welches mit dem zu testenden Steuergerät ECU verbunden ist und beispielsweise digitale Eingangs- und Ausgangssignale mit diesem austauschen kann. Die I/O-Schaltung ADC weist einen oder mehrere Analog-Digitalwandler auf, der oder die analoge Signale des zu testenden Steuergerät DUT empfängt bzw. empfangen. Über die I/O-Schaltung DAC, welche einen oder mehrere Digital-Analog-Wandler aufweist, kann der Simulator ES analoge Signale an das zu testende Steuergerät ECU ausgeben.

Frei programmierbare Logikbausteine FPGA werden insbesondere für Anwendungsbereiche wie E-Drive und Leistungselektronik eingesetzt, weil dort besonders schnelle Regelkreise auftreten. Zweckmäßigerweise weisen Logikboards mit einem solchen FPGA mehrere Steckplätze für I/O-Module auf; beispielsweise bietet dSPACE das DS6601 FPGA Base Board mit fünf Steckplätzen an, die mit unterschiedlichen I/O-Module bestückt werden können. Eine bestehende Testumgebung kann durch den Einbau eines neuen I/O-Moduls beispielsweise um eine Analog-Digital-Wandlung mit einer hohen Auflösung erweitert werden.

Der HIL-Simulator führt ein Simulationsmodell mit zwei Komponenten aus. Auf dem Rechenknoten CN ist ein erstes Teilmodell RTA bzw. eine erste Simulations-Komponente hinterlegt, welches als Echtzeitapplikation vom Prozessor des Rechenknotens ausgeführt wird. Der programmierbare Logikbaustein FPGA ist so konfiguriert, dass auf einem Teil der Fläche ein zweites Teilmodell CNF bzw. eine zweite Simulations-Komponente und auf einem anderen Teil der Fläche ein Steuerungsmodul CTL implementiert ist. Das Steuerungsmodul CTL ist über Baustein IOF mit einem I/O-Modul IOM verbunden, welches Analog-Digital-Wandler ADC#1, ADC#n und Digital-Analog-Wandler DAC#1 und DAC #n aufweist.

Figur 2 zeigt eine schematische Darstellung einer bestehenden Lösung zur Abbildung von Multi-Rate Anwendungen im HIL-Kontext. Es wird FPGA-Technologie als Rechenbeschleuniger genutzt, um spezifische Modellteile passend zu ihrer Dynamik in der Simulation stabil abbilden zu können. Ein typischer Anwendungsbereich ist die E-Mobilität, exemplarisch hierfür sind die Simulation und die Regelung elektrischer Motoren. Es sind aber auch Anwendungen aus der Domäne ADAS/AD relevant, bei der oftmals GPU's als schnelle Rechenknoten zum Tragen kommen. FPGAs sampeln im HIL Use-Case üblicherweise um einen Faktor ~100.000 schneller als CPUs, und sind dabei strikt zeitsynchron (Schrittweite CPU-Modelle typisch 1ms-100µs; FPGA-Takt typisch 8ns).

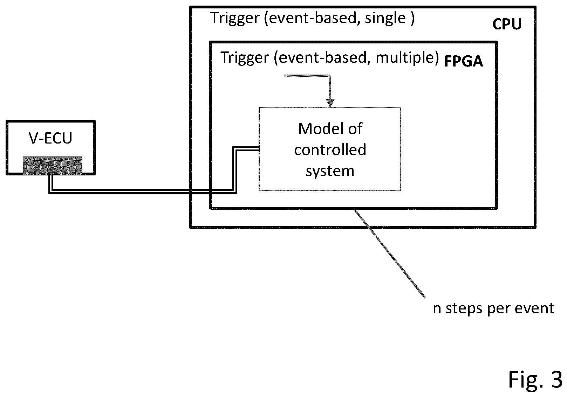

Figur 3 zeigt eine schematische Darstellung einer erfindungsgemäßen Lösung zur Abbildung von Multi-Rate Anwendungen in einer SIL-Simulation.

Der dargestellte Lösungsansatz sieht vor, dass - wie im HIL-Ansatz auch - eine CPU (oder mehrere CPUs) mit einem (oder mehreren) schnellen Echtzeitknoten - z.B. FPGA-Ressourcen - im Rahmen einer Co-Simulation kommunizieren. Das Gesamtsystem bildet in der Co-Simulation mathematische Modelle realer physikalischer Systeme als Multi-Rate-System ab, beispielsweise die Regelung eines E-Motors in einem Fahrzeug, die mit z.B. 10kHz realisiert ist.

Vorzugsweise wird im SIL-Fall, insbesondere auf der CPU-Seite, auf eine rein virtuelle Zeit zurückgegriffen, welche üblicherweise zur echten Zeit unstetig ist. Die in dieser Anmeldung beschriebene Synchronisation zeichnet sich dadurch aus, dass sie die Anzahl der berechneten Schritte auf allen teilnehmenden Berechnungskonten synchronisiert, was unabhängig von den Rechenfrequenzen der beteiligten Rechenressourcen (z.B. FPGAs) erfolgt.

Bei der diskreten Abbildung von Multi-Rate-Modellen in der SIL-Umgebung liegt die Anforderung der Synchronität somit nicht mehr in der Zeit-Domäne, sondern in der richtigen Abarbeitungsreihenfolge der Berechnungsschritte zur Sicherstellung konsistenter Berechnungsergebnisse.

Um eine Synchronisation zwischen den Berechnungsknoten (z.B. CPU(s) und FPGA(s)) zu erreichen, übernimmt vorzugsweise der vermutlich langsamste Teilnehmer der vernetzten Co-Simulation die Rolle des Masters. Nach einem Rechenschritt des Masters werden die zugehörigen schnelleren Simulationsteilnehmer (Slaves) vom Master dazu aufgefordert, die dem Multi-Rate Verhältnis entsprechenden n Simulationsschritte "as soon as possible" durchzuführen. Alternativ kann der Master auch explizit bestimmt werden; hierbei kann auch ein externer Master die Ausführung sämtlicher beteiligter Simulations-Komponenten triggern. Im Rahmen von Debugging kann das automatisch wiederholte Triggern gestoppt und die Ausfürung im "Einzelschritt-Verfahren" gezielt manuell getriggert durchlaufen werden.

Für die Berechnungs-Synchronisierung wird die - möglichst schnelle - Clock Frequenz der real verbauten schnellen Zielplattform(en) (z.B. FPGA oder GPU) von dem Task Manager getriggert. Sobald die Anzahl nötiger Berechnungsschritte des/der Slave(s) komplett erfolgt ist, ruft der Task Manager wieder den Master auf und der Zyklus startet von vorne.

Pro Rechenschritt muss eine aus dem Verhältnis von Schrittweite CPU-Modell und Taktrate FPGA ermittelte Anzahl von Takten des FPGAs ausgeführt werden; in einer alternativen Ausführung wird das Erfordernis einer taktgenauen Ausführung durch eine Zeitmessung mit vorgegebener Genauigkeit wie z.B. 50 ns ersetzt.

In dem typischen Anwendungsfall werden nur wenig Daten zwischen Prozessor und FPGA ausgetauscht; beispielsweise gibt der Prozessor einen gewünschten Sollwert für die Regelgröße vor (z.B. Drehmoment, Drehzahl), und die Detailregelung erfolgt im FPGA.

Die Rechenschritte können von einem gesonderten Prozess als Master getriggert werden, der entweder auf Prozessor ausgeführt wird, der auch das CPU-Modell ausführt; alternativ kann ein gesonderter Prozessor den Triggerprozess ausführen.

Beispielsweise kann der FPGA mittels des Clock-Enable-Eingangs angehalten werden, sobald die gewünschte Anzahl von Takten für den Rechenschritt abgearbeitet wurde. Hierbei muss nicht der gesamte FPGA gestoppt werden, vielmehr kann es ausreichen, dass der Teilbereich, welcher die Simulations-Komponente implementiert, gestoppt wird.

Es gibt auf FPGAs bzw. FPGA-Boards typischerweise mindestens einen konfigurierbaren Clock-Generator, der für die Ausführung der Erfindung genutzt werden kann. In einer Ausführungsform kann ein Controller für die Zeitsynchronisation bzw. Takt-Steuerung auf einem Teilbereich des FPGA implementiert werden.

Mit dieser Erfindung ist es erstmals möglich, die im HIL eingesetzte FPGA-Technologie auch für die "Software-in-the-Loop" (SIL) Welt zu verwenden. Die SIL-Welt zeichnet sich dadurch aus, dass die verwendetet Modelle (bzw. der daraus erzeugte Code) unabhängig von der realen Zeit mal schneller als Echtzeit, mal langsamer als Echtzeit, mal im Schritt-für-Schritt-Modus ausgeführt werden, je nach Notwendigkeit für den konkreten Testfall. Bisher war dies nur mit CPU-Codebasierten Anteilen möglich. Die Erfindungsmeldung erweitert nun die "SIL-Methodik" auf andere Code-/Berechnungs-Methoden (z.B. FPGAs oder auch GPUs), die bisher nur in der "Echtzeit-Welt" zur Anwendung kommen. Dadurch wird nun erstmals möglich, z.B. FPGA-Modelle für die Regelung von E-Motoren 1:1 in die SIL-Welt zu übertragen und dort die gleichen Modelle (bzw. den daraus erzeugten FPGA-Code) und die entsprechenden HIL-Tests wiederzuverwenden. Im SIL-Testing hat man nun aber zusätzlich die Möglichkeit, die Berechnung des Gesamt-Systems - je nach Notwendigkeit - beliebig zu verlangsamen. Außerdem können die Gesamtmodelle nun relativ einfach - z-B. in einer Cloud-Umgebung - parallel ausgeführt werden, um möglichst schnell möglichst viele Tests durchlaufen zu können.

## Patentansprüche

1. Verfahren zur synchronisierten SIL-Simulation einer ersten Simulations-Komponente, die für einen Rechnerbaustein vorgesehen ist, und einer zweiten Simulations-Komponente, die für einen Beschleunigerbaustein vorgesehen ist, wobei der ersten Komponente eine erste Simulations-Schrittweite zugeordnet ist, wobei der zweiten Komponente eine zweite Simulations-Schrittweite zugeordnet ist, insbesondere eine kürzere, mit den Schritten
• Laden der ersten Simulations-Komponente auf eine Rechenfarm mit mindestens einem Rechnerbaustein und der zweiten Simulations-Komponente auf eine Beschleunigerfarm mit mindestens einem Beschleunigerbaustein,
• Festlegen eines Zeit-Masters, der eine Ausführung der ersten Simulations-Komponente und der zweiten Simulations-Komponente triggert, wobei ein Trigger die Ausführung eines Simulationsschritts umfassend einen Zeitschritt der ersten Simulations-Komponente und einer Mehrzahl n von Zeitschritten der zweiten Simulations-Komponente auslöst,
• Durchführen der Simulation durch wiederholtes Triggern eines Simulationsschritts, wobei ein neuer Simulationsschritt getriggert wird, sobald die erste und die zweite Simulations-Komponente die Berechnungen des aktuellen Simulationsschritts beendet haben.

2. Verfahren nach Anspruch 1, **dadurch gekennzeichnet, dass** der Rechnerbaustein ein Prozessor ist, dass der Beschleunigerbaustein ein programmierbarer Logikbaustein ist, und dass die zweite Komponente als Konfigurationsbitstrom ausgeführt ist.

3. Verfahren nach Anspruch 2, **dadurch gekennzeichnet, dass** der programmierbare Logikbaustein einen Clock-Enable-Eingang aufweist und zumindest ein die zweite Komponente implementierender Teil des programmierbaren Logikbausteins mittels des Clock-Enable-Eingangs angehalten wird, sobald die gewünschte Anzahl von Takten für den Simulationsschritt abgearbeitet wurde.

4. Verfahren nach Anspruch 1, **dadurch gekennzeichnet, dass** der Rechenbaustein ein Prozessor einer ersten Instruktionsarchitektur ist, dass der Beschleunigerbaustein mindestens einen Rechenkern mit Unterstützung von Parallelverarbeitung und/oder mindestens einen Rechenkern für Matrixberechnungen und/oder einen Prozessor mit einer zweien Instruktionsarchitektur, die sich von der ersten Instruktionsarchitektur unterscheidet, umfasst.

5. Verfahren nach einem der vorhergehenden Ansprüche, **dadurch gekennzeichnet, dass** die Mehrzahl n von Zeitschritten der zweiten Simulations-Komponente aus dem Verhältnis eines Zeitschritts der ersten Simulations-Komponente zu einem Zeitschritt der zweiten Simulations-Komponente ermittelt wird.

6. Verfahren nach Anspruch 5, **dadurch gekennzeichnet, dass** der Zeitschritt der ersten Simulations-Komponente im HIL-System einer realen Zeit entspricht, und dass im Fall einer SIL-Simulation eine nichtstetige virtuelle Zeit verwendet wird.

7. Verfahren nach einem der vorhergehenden Ansprüche, **dadurch gekennzeichnet, dass** die Mehrzahl n von Zeitschritten der zweiten Simulations-Komponente synchron zu einem festen Takt des Beschleunigerbausteins berechnet werden.

8. Verfahren nach einem der vorhergehenden Ansprüche, **dadurch gekennzeichnet, dass** ein gesonderter Prozess auf dem Prozessor, welcher die erste Komponente ausführt, als Zeit-Master festgelegt wird.

9. Rechnersystem, umfassend eine Rechenfarm mit mindestens einem Prozessor, eine Beschleunigerfarm mit mindestens einem programmierbaren Logikbaustein, **dadurch gekennzeichnet, dass** auf einem nichtflüchtigen Speicher des Rechnersystems Instruktionen zur Durchführung eines Verfahrens nach einem der vorhergehenden Ansprüche hinterlegt sind.

10. Nichtflüchtiger Datenträger mit einem computerlesbaren Speichermedium, auf dem Befehle eingebettet sind, die, wenn sie von einem Prozessor ausgeführt werden, bewirken, dass der Prozessor dazu eingerichtet ist, ein Verfahren gemäß einem der vorhergehenden Ansprüche auszuführen.
